Europäisches Patentamt

European Patent Office

Office européen des brevets

(11) Publication number: **0 457 355 B1**

## EUROPEAN PATENT SPECIFICATION

(45) Date of publication of patent specification: **20.09.95**  (51) Int. Cl.6: **C08F 20/12**

(21) Application number: **91108095.0**

(22) Date of filing: **17.05.91**

(54) **Process for the continuous bulk production of acrylic polymers.**

(30) Priority: **18.05.90 IT 2037890**

(43) Date of publication of application:
**21.11.91 Bulletin 91/47**

(45) Publication of the grant of the patent:
**20.09.95 Bulletin 95/38**

(84) Designated Contracting States:
**AT BE CH DE DK ES FR GB LI NL SE**

(56) References cited:
**EP-A- 0 319 622**
**DE-A- 2 461 164**
**US-A- 3 637 545**

**CHEMICAL ABSTRACTS, vol. 112, no. 6, 5 February 1990, Columbus, Ohio, US, abstract no. 36780Z; MITSUBISHI RAYON CO.: "Continuous manufacture of methacrylate polymers", page 23, column 1**

(73) Proprietor: **ELF ATOCHEM ITALIA S.r.l.**
**Via Gioacchino Murat 17**
**I-20159 Milano (IT)**

(72) Inventor: **Relvini, Pasquale, Dr.**
**4, Via Baranzate**
**I-20026 Novate Milanese, Milano (IT)**
Inventor: **Airaghi, Fortunato**
**18, Via Bettinetti**
**I-20017 Rho,**
**Milano (IT)**

(74) Representative: **Barz, Peter, Dr. et al**
**Patentanwalt**
**Kaiserplatz 2**
**D-80803 München (DE)**

Rank Xerox (UK) Business Services
(3.10/3.09/3.3.3)

**Description**

The present invention relates to a process for the continuous bulk production of acrylic polymers.

The term "acrylic polymers", whenever used in the present specification, denotes the homopolymers and copolymers of the alkyl esters of acrylic and methacrylic acid wherein the alkyl group contains from 1 to 8, preferably 1 to 4, carbon atoms.

Preferred examples of said acrylic and methacrylic acid esters are methylacrylate, ethylacrylate, isopropylacrylate, butylacrylate, methyl methacrylate, isopropyl methacrylate, sec.butyl methacrylate and tert-butyl methacrylate.

The acrylic polymers can also contain up to 50% by weight of units derived from other unsaturated monomers such as styrene, alpha-methylstyrene, acrylonitrile, (meth)acrylamide, (preferably $C_1$-$C_8$) n-alkyl maleimides or (preferably $C_6$-$C_{14}$) aryl maleimides etc., or from poly-unsaturated monomers such as dienes, for example butadiene.

The production of acrylic polymers such as, for example, polymethyl methacrylate (PMMA), is generally effected by means of a discontinuous process in an aqueous suspension.

The reaction occurs in stirred reactors which are charged with the monomer to which a radical initiator has been added and the aqueous phase contains a suspending agent, which is to prevent the caking of the polymer which gradually forms.

The heat of polymerization is removed through the aqueous phase, thus permitting to control the reaction which proceeds until a practically complete conversion of the monomer has occurred. The polymer in the form of beads is separated by centrifugation from the reaction mixture and then it is washed and dried. The PMMA beads are fed to an extruder in order to obtain granules and plates.

The suspension polymerization technology, owing to the type of utilized additives and to the sequence of operations involved, which cannot be integrated in a continuous process, unavoidably gives rise to polymer contaminations which are accompanied by an impairment of, e.g., the excellent intrinsic optical properties of PMMA. Said impairment (which seems to scarcely affect the usual applicative requirements) precludes the use of the polymer in emerging industrial sectors such as those of optical fibres, laser scanning discs and optical instruments in general. The main causes of the optical polution of the polymer are:

- the suspending agent, which remains incorporated in the polymer in small amounts and gives rise to yellowing and loss of transparency;
- the high molecular weight polymer fractions (which are apparent in the manufactured articles in the form of microgels), the formation of which is linked to non-homogeneity within the suspension and to the formation of agglomerates and scales in the reactors;
- the foreign particles, which infiltrate in the production flow due to the process discontinuity.

These contamination causes can be removed by using a bulk polymerization process, as is described, for example, in JP-A-59/45,310; 59/48,121; 58/88,701; 58/88,702 and 50/34,071, which provides polymers starting from a homogeneous mixture consisting of a monomer containing small amounts of a radical polymerization starter and of a molecular weight modifier, without using other auxiliary materials (for example dispersants). A corresponding system permits to integrate in a single continuous process all production steps, from those preceding the polymerization up to the extrusion of the polymer in the form of granules or plates, thereby minimizing the risks of infiltrations by foreign particles and sensibly reducing the operating costs.

The obstacles to be overcome for conducting a continuous bulk polymerization process are mainly due to a gradual increase of the viscosity of the reaction mixture as the monomer is converted into polymer, said increase involving:

- difficulties in stirring, feeding and discharging the reaction mass;
- difficulties in dissipating the heat of reaction and, therefore, in thermally controlling the reaction;
- acceleration of the polymerization rate due to a decrease in the termination rate of the macroradicals and to the consequent increase in the concentration of active species in the reaction mixture; this phenomenon, which is known as "gel-effect" or "self-acceleration", gives rise to a higher amount of heat generated per time unit.

There has now been found a continuous process for the production of acrylic polymers, by polymerization in a homogeneous phase, which permits to overcome the above critical points and to obtain a polymer having constant characteristics and a high quality, particularly as regards the optical properties thereof.

JP-A-89-201 307 (Chemical/Abstracts 112, no. 6 (05.02.90), abstract no. 36780z) discloses the continuous polymerization of methyl methacrylate and mixtures thereof with other alkyl (meth)acrylates in the presence of, i.a., 5 to 30% of mixtures of monohydric alcohols and (alkyl)benzenes as solvents.

The present invention provides a process for the continuous bulk production of homopolymers and copolymers of $C_1$-$C_8$ alkyl esters of acrylic and/or methacrylic acid which comprises:

(a) continuously feeding a polymerization reactor with a reaction mixture containing acrylic monomer and from 5 to 30% by weight of at least one polymerization adjuvant selected from the $C_1$-$C_{10}$ (and particularly $C_1$-$C_4$) alkyl esters of organic acids of formula R-COOH, wherein R represents hydrogen or a $C_1$-$C_6$ (particularly a $C_1$-$C_3$) alkyl group as solvent of the corresponding polymer;

(b) converting 70 to 90% of the monomers at a temperature of from 120 to 160°C; and

(c) devolatilizing the resulting polymer at a temperature of from 200 to 250°C and at a pressure of from atmospheric pressure to $10^3$ Pa.

In the process of the present invention, the polymerization reactor is preferably of the tubular type and is equipped with internal cooling surfaces in order to exchange the heat of polymerization which is gradually generated.

The polymerization reactor is continuously fed with the reaction mixture which usually comprises at least one acrylic monomer of the above-mentioned type, optionally in admixture with (preferably not more than 50% by weight of) other monomers containing ethylenic double bonds, a radical polymerization initiator, a molecular weight modifier (chain transfer agent) and the polymerization adjuvant.

The radical polymerization initiator is generally utilized in amounts ranging from 0.001 to 0.1% by weight, based on the total weight of the reaction mixture, and preferably is selected from compounds which have a half-life at 130°C of less than 3 hours, generally from 0.3 to 2 hours.

Examples of radical initiators which are utilizable in the process fo the present invention are the peroxide starters such as di-tert-butyl-peroxide, tert-butylperoxybenzoate, dicumyl peroxide, 2,5-dimethyl-2,5-bis(tert-butylperoxy)-hexane, and bis(tert-butylperoxyisopropyl)benzene.

The molecular weight modifier generally is utilized in amounts ranging from 0.1 to 1% by weight, calculated on the total weight, and preferably is selected from mono- and difunctional mercaptanes of formula $R_1$-$(SH)_m$, wherein $R_1$ represents a (preferably $C_1$-$C_{20}$) alkyl radical, a (preferably $C_3$-$C_8$) cycloalkyl radical or a (preferably $C_6$-$C_{20}$) aromatic radical and m is 1 or 2; or of formula

$(HS$-$R_2$-$COO)_n R_3$

where $R_2$ and $R_3$ represent a (preferably $C_1$-$C_{10}$) alkyl radical and n is an integer ranging from 1 to 4.

Specific examples of suitable molecular weight modifiers are n-butyl-mercaptane, n-dodecylmercaptane, tert-dodecylmercaptane, cyclohexylmercaptane, n-octylmercaptane, and 2-ethylhexyl-3-mercaptopropionate.

The polymerization adjuvant is contained in the mixture fed to the reactor in amounts ranging from 5 to 30% by weight, particularly from 15 to 25%. Specific examples of polymerization adjuvants employed according to the present invention are n-butylformate, n-butylacetate, isobutylacetate, tert-butylacetate, ethylpropionate, methyl butyrate, ethyl isobutyrate and methyl hexanoate.

In the reactor inside the temperature is maintained at 120 to 160°C, in order to keep the viscosity of the monomer-polymer solution within an acceptable range and to reduce (or shift towards higher conversions the start of) the self-acceleration, while the pressure is maintained at values ranging from the vapour pressure of the mixture to 0.5 MPa.

Once a monomer conversion of 70 to 90% has been obtained, the reaction mixture may be discharged from the reactor and conveyed to a devolatilization device operating at a temperature ranging from 200 to 250°C and a pressure ranging from atmospheric pressure to $10^3$ Pa.

From the devolatilization device the polymer, preferably in the molten state, may be conveyed to a die in order to obtain granules, or to an extrusion head to obtain plates.

The volatile components extracted by the devolatilization device and substantially consisting of unreacted monomers and polymerization adjuvant, may be recycled to the reactor.

When the polymer prepared by the process of the present invention is PMMA or a methyl methacrylate copolymer containing, for example, up to 25% by weight of one or more other acrylic monomers, the product generally exhibits the following optical properties:

Transmittance (ASTM D 1003-61): higher than 92% on 3 mm thick specimens;

Haze (ASTM D 1003-61): lower than 0.5% on 3 mm thick specimens;

Yellowing index (ASTM D 1925-70): lower than 2.5 on 60 mm thick specimens.

For a better understanding of the present invention a few illustrative but not limitative examples are given hereinafter.

3

Example 1

There was prepared a mixture consisting of:

```
methyl methacrylate              74     parts by weight
methyl acrylate                   6     parts by weight
n-butylacetate                   20     parts by weight
n-dodecanethiol                 0.2     parts by weight
di-tert-butylperoxide         0.003 parts by weight.
```

After removal of the dissolved oxygen by means of a nitrogen stream, the mixture was continuously charged, at a flowrate of 25 l/h, to a vertical tubular reactor of 20 l volume, equipped with horizontal rows of tubes for the heat exchange.

Between one row and the next one the stirrer blades rotated at a speed of 50 r.p.m.

The mixture proceeded, with a piston-like flow, from the top to the bottom of the reactor and the residence time was 8 hours.

The internal reactor temperature was adjusted at 120°C and the pressure was adjusted at 300 kPa by letting in nitrogen.

The mixture left the reactor at a polymer concentration of 65%, corresponding to a conversion of 80%, and was fed, by means of a gear pump, to the devolatilization section consisting of a heat exchanger directly arranged in an evaporation chamber maintained at reduced pressure.

The polymer was devolatilized at 240°C and a pressure of 3 kPa.

The vapours generated inside the chamber and consisting of the unreacted monomers and of n-butylacetate were caused to flow to the condensation system whereafter they were mixed with fresh monomers, the polymerization initiator and the chain transfer agent. The resulting mixture was conveyed again to the polymerization reactor.

The polymer was withdrawn from the bottom of the devolatilization device by means of a gear pump, conveyed to a die and converted into granules. The die temperature was 240°C.

There were obtained 16 kg/h of polymer having a content of volatile components (residual monomers and n-butylacetate), determined by gas chromatography, of less than 0.3%.

The other characteristics were those of an excellent polymethyl methacrylate suitable for extrusion:

```
Vicat softening point 4.9 N, ISO method 306         105°C

Melt Flow Index 230°C/3.8 kg, ISO method 1133       1.5 g/10'

Light transmission (400-900 nm)
specimen thickness: 3 mm, method ASTM D 1003-61     >92%
```

```
Haze
specimen thickness: 3 mm, method ASTM D 1003-61    0.4%

Yellowing index
specimen thickness= 60 mm, method ASTM D 1925-70   2.0
```

Furthermore the granules were extruded in the form of a plane plate, thus resulting in a product with excellent aesthetic characteristics and free of surface defects (gels).

After a continuous 500-hour operation, no significant sticking or accumulation of polymer on the walls of the apparatus and in the tubes was observed.

## Example 2

Using the apparatus and the general operative modalities described in example 1, the polymerization reactor was fed with a mixture consisting of:

```
methyl methacrylate              78.5   parts by weight
methyl acrylate                   1.5   parts by weight
isobutyl acetate                 20     parts by weight
n-dodecanethiol                   0.2   parts by weight
2,5-dimethyl-2,5-bis-
(tert-butylperoxy)hexane          0.004 parts by weight.
```

The polymerization temperature was adjusted at 120°C, the pressure at 300 kPa and the residence time at 6.5 hours.

The mixture left the reactor at a polymer concentration of 65%, corresponding to a conversion of 80%, and then was devolatilised at 240°C and 3 kpa. The die was maintained at 240°C.

There were obtained 20 kg/h of polymer granules suitable for extrusion, having a content of residual monomers and of isobutyl acetate lower than 0.3%.

The other characteristics are given hereinafter:

```
The other characteristics are given hereinafter:
Vicat softening point 4.9 N, ISO method 306            110°C
Melt Flow Index 230°C/3.8 kg, ISO method 1133          1 g/10'


Light transmission (400-900 nm)
specimen thickness: 3 mm, method ASTM D 1003-61        >92%
Haze
specimen thickness: 3 mm, method ASTM D 1003-61        0.3%
Yellowing index
specimen thickness= 60 mm, method ASTM D 1925-70       1.8
```

The granules were extruded at 250°C in the form of double-wall plates (insulating plates); the product so obtained exhibited excellent aesthetical characteristics.

After a continuous 500-hour operation, no polymer was found to stick to the surfaces of the utilized apparatus.

## Example 3

Using the apparatus and following the general operative modalities described in example 1, the polymerization reactor was fed with a mixture consisting of:

```
methyl methacrylate              74     parts by weight
methyl acrylate                   6     parts by weight
ethyl propionate                 20     parts by weight
2-ethylhexyl-3-
mercapto-propionate               0.4   parts by weight
dicumylperoxide                   0.01  parts by weight.
```

The polymerization temperature was adjusted at 120°C, the pressure at 300 kPa and the residence time at 5.5 hours.

The mixture left the reactor at a polymer concentration of 60%, corresponding to a conversion of 75%, and was then devolatilised at 230°C and 3 kpa. The temperature of the die was maintained at 230°C.

There were obtained 21.8 kg/h of polymer granules suitable for injection molding, with a content of residual monomers and of ethyl propionate lower than 0.2%.

The other characteristics were as follows:

```
Vicat softening point 4.9 N, ISO method 306         105°C

Melt Flow Index 230°C/3.8 kg, ISO method 1133       4.5 g/10'

Light transmission (400-900 nm)
specimen thickness: 3 mm, method ASTM D 1003-61     >92%

Haze
specimen thickness: 3 mm, method ASTM D 1003-61     0.4%

Yellowing index
specimen thickness= 60 mm, method ASTM D 1925-70    2.2
```

After a continuous 500-hour operation no polymer scales in the utilized apparatus could be detected.

## Claims

1. Process for the continuous bulk production of homopolymers and copolymers of $C_1$-$C_8$ alkyl esters of acrylic and/or methacrylic acid which comprises:

    (a) continuously feeding a polymerization reactor with a reaction mixture containing acrylic monomer and from 5 to 30% by weight of at least one polymerization adjuvant selected from the $C_1$-$C_{10}$ alkyl esters of organic acids of formula R-COOH, wherein R represents hydrogen or a $C_1$-$C_6$ alkyl group as solvent of the corresponding polymer;

    (b) converting 70 to 90% of the monomers at a temperature of from 120 to 160°C; and

    (c) devolatilizing the resulting polymer at a temperature of from 200 to 250°C and at a pressure of from atmospheric pressure to $10^3$ Pa.

2. Process according to claim 1, wherein the acrylic monomer comprises one or more $C_1$-$C_4$ alkyl esters of acrylic and/or methacrylic acid, particularly methyl methacrylate.

3. Process according to any one of the preceding claims, wherein the polymerization adjuvant is selected from the $C_1$-$C_4$ alkyl esters of monocarboxylic acids having a total of 1 to 4 carbon atoms.

4. Process according to any one of the preceding claims, wherein the reaction mixture of step (a) also contains a radical polymerization initiator.

5. Process according to any one of the preceding claims, wherein the reaction mixture of step (b) also contains a molecular weight modifier.

## Patentansprüche

1. Verfahren zur kontinuierlichen Masse-Herstellung von Homopolymeren und Copolymeren von $C_1$-$C_8$-Alkylestern von Acryl- und/oder Methacrylsäure, welches umfaßt:

    (a) die kontinuierliche Beschickung eines Polymerisationsreaktors mit einer Reaktionsmischung, die acrylisches Monomer und 5 bis 30 Gewichts-% mindestens eines Polymerisationsadjuvanses, das aus $C_1$-$C_{10}$-Alkylestern von organischen Säuren der Formel R-COOH ausgewählt ist, worin R Wasserstoff oder eine $C_1$-$C_6$-Alkylgruppe darstellt, als Lösungsmittel des entsprechenden Polymeren enthält;

    (b) die Umwandlung von 70 bis 90% der Monomeren bei einer Temperatur von 120 bis 160°C; und

    (c) die Devolatilisierung des resultierenden Polymeren bei einer Temperatur von 200 bis 250°C und bei einem Druck von Atmosphärendruck bis $10^3$ Pa.

**2.** Verfahren nach Anspruch 1, in welchem das acrylische Monomer einen oder mehrere $C_1$-$C_4$-Alkylester von Acryl- und/oder Methacrylsäure, insbesondere Methylmethacrylat, umfaßt.

**3.** Verfahren nach irgendeinem der vorangehenden Ansprüche, in welchem das Polymerisationsadjuvans aus $C_1$-$C_4$-Alkylestern von Monocarbonsäuren mit insgesamt 1 bis 4 Kohlenstoffatomen ausgewählt wird.

**4.** Verfahren nach irgendeinem der vorangehenden Ansprüche, in welchem die Reaktionsmischung von Stufe (a) auch einen radikalischen Polymerisationsinitiator enthält.

**5.** Verfahren nach irgendeinem der vorangehenden Ansprüche, in welchem die Reaktionsmischung von Stufe (b) auch ein Molekulargewichts-Modifiziermittel enthält.

**Revendications**

**1.** Procédé pour la production en masse en continu d'homopolymères et copolymères d'esters d'alkyle en $C_1$-$C_8$ de l'acide acrylique et/ou méthacrylique, qui comprend les opérations consistant à :
   (a) alimenter en continu un réacteur de polymérisation par un mélange réactionnel contenant un monomère acrylique et de 5 à 30% en poids d'au moins un adjuvant de polymérisation, choisi parmi les esters d'alkyle en $C_1$-$C_{10}$ d'acides organiques de formule R-COOH, où R représente hydrogène ou un groupe alkyle en $C_1$-$C_6$ en tant que solvant du polymère correspondant ;
   (b) convertir 70 à 90% des monomères à une température de 120 à 160°C ; et
   (c) dévolatiliser le polymère résultant à une température de 200 à 250°C et sous une pression allant de la pression atmosphérique à $10^3$ Pa.

**2.** Procédé selon la revendication 1, dans lequel le monomère acrylique comprend un ou plusieurs esters d'alkyle en $C_1$-$C_4$ de l'acide acrylique et/ou méthacrylique, en particulier le méthacrylate de méthyle.

**3.** Procédé selon l'une quelconque des revendications précédentes, dans lequel l'adjuvant de polymérisation est choisi parmi les esters d'alkyle en $C_1$-$C_4$ d'acides monocarboxyliques ayant un total de 1 à 4 atomes de carbone.

**4.** Procédé selon l'une quelconque des revendications précédentes, dans lequel le mélange de réaction de l'étape (a) contient également une initiateur de polymérisation radicalaire.

**5.** Procédé selon d'une quelconque des revendications précédentes, dans lequel le mélange réactionnel de l'étape (b) contient également un agent modificateur de masse moléculaire.